**Europäisches Patentamt**

**European Patent Office**

**Office européen des brevets**

(19)

(11) Veröffentlichungsnummer: **0 002 537**
A2

(12)

# EUROPÄISCHE PATENTANMELDUNG

(21) Anmeldenummer: **78101721.5**

(22) Anmeldetag: **18.12.78**

(51) Int. Cl.²: **G 06 K 19/08**
G 08 G 1/12, B 60 R 25/00
G 06 K 7/10, G 03 H 1/00

(30) Priorität: **19.12.77 DE 2756632**

(43) Veröffentlichungstag der Anmeldung:
**27.06.79 Patentblatt 79/13**

(84) Benannte Vertragsstaaten:
**BE CH FR GB IT LU NL SE**

(71) Anmelder: **Licentia Patent-Verwaltungs-GmbH**
**Theodor-Stern-Kai 1**
**D-6000 Frankfurt/Main 70(DE)**

(72) Erfinder: **Herziger, Gerd, Dr.**
**Fasanenweg 2**
**D-6101 Rossdorf 2(DE)**

(72) Erfinder: **Peschko, Wolfram, Dipl.-Phys.**
**Kahler Strasse 25**
**D-6100 Darmstadt(DE)**

(72) Erfinder: **Bakowsky, Lothar, Dipl.-Phys.**
**Schiller-Ring 15**
**D-6234 Hattersheim 2(DE)**

(54) **Vorrichtung zur fälschungssicheren Kennzeichnung von Gegenständen.**

(57) Es soll eine Vorrichtung zur fälschungssicheren Kennzeichnung von Gegenständen (1) geschaffen werden.

Das Kennzeichen des Gegenstands (1) wird in Form einer Hologrammaufnahme auf einem Träger (2) aufgezeichnet. Dieser Träger (2) wird mit dem zu identifizierenden Gegenstand (1) verbunden. Der Träger (2) ist so ausgebildet, daß er ohne Zerstörung der Aufzeichnung des Hologramms nicht vom Gegenstand (1) mehr abgelöst werden kann.

EP 0 002 537 A2

Croydon Printing Company Ltd.

Fig. 1

L i c e n t i a

Patent-Verwaltungs-GmbH

6000 Frankfurt/M 70, Theodor-Stern-Kai 1

- 1 -

## Vorrichtung zu fälschungssicheren Kennzeichnung von Gegenständen

Die Erfindung bezieht sich auf eine Vorrichtung zur fälschungssicheren Kennzeichnung von Gegenständen.

Häufig werden die amtlichen Kennzeichen von gestohlenen Kraftfahrzeugen durch gefälschte Kennzeichen ersetzt. Diese gefälschten Kennzeichen machen die Feststellung, ob ein Kraftfahrzeug gestohlen ist oder nicht, besonders schwierig. Man ist daher seit längerer Zeit bestrebt, die Kennzeichnung von Kraftfahrzeugen gegen Fälschung zu sichern. Ein brauchbarer Vorschlag über die Art und Weise einer fälschungssicheren Kennzeichnung ist bisher jedoch noch nicht bekannt geworden.

Der Erfindung liegt die Aufgabe zugrunde, eine zur fälschungssicheren Kennzeichnung geeignete Vorrichtung zu entwickeln, die im Aufbau einfach ist, leicht hergestellt und am Gegenstand angebracht werden kann und schnell überprüfbar ist.

Die Aufgabe wird erfindungsgemäß dadurch gelöst, daß die Kennzeichen als Hologrammaufnahmen auf einem Träger aufgezeichnet sind, der mit dem identifizierenden Gegenstand verbunden und ohne Zerstörung der Aufzeichnung nicht von diesem lösbar ist. Auf dem Träger kann z.B. das amtliche Kraftfahrzeugkennzeichen aufgezeichnet sein. Weitere Aufzeichnungen können sich auf die Fahrgestellnummer, den Fahrzeugtyp, das Baujahr und gegebenenfalls weitere für die Identifizierung geeignete Informationen wie z.B. den Namen des Kraftfahrzeughalters beziehen. Mit der holografischen Aufzeichnung lassen sich große Mengen von Daten auf relativ kleinen Raum speichern. Eine Änderung der holografischen Aufzeichnung zum Zwecke einer Fälschung ist nicht möglich. Bei der Entfernung des Trägers wird dieser und die Aufzeichnung zerstört. Der Träger kann deshalb nicht wieder anderweitig verwendet werden. Die holografische Aufzeichnung läßt sich auch bei Schmutzablagerungen auf dem Träger, Beschädigungen der Trägeroberfläche durch Kratzspuren und Rissen oder Aussparungen an den Rändern noch erkennen. Die Kennzeichnung ist daher auch für rauhe Betriebsbedingungen geeignet. Für manche Anwendungsfälle reicht es aus, wenn eine Folie verwendet wird, die beim Ablösen vom Gegenstand nicht zerstört wird. Beispielsweise können solche Folien zur Markierung einzelner Transportkörper von Transportsystemen verwendet werden. An Hand des aufgezeichneten Hologramms läßt sich der Zielort des mit dem Träger versehenen Transportkörpers schnell und einfach feststellen.

Bei einer zweckmäßigen Ausführungsform ist vorgesehen, daß auf dem Träger eine oder mehrere weitere Hologrammaufnahmen mit vorgegebenen Strukturen vorhanden sind, die an ausgewählten Stellen des Trägers aufgezeichnet sind, wobei durch Zerstörung des Trägers aus den auf den Teilen verbleibenden Reststrukturen keine vollständige Information herleitbar ist. Diese Strukturen dienen also als Gültigkeitsinformationen für die ursprüngliche Hologrammaufnahme. Wenn als Träger z.B. eine Kunststoffolie verwendet wird, die bei der Ablösung vom Gegenstand zerreißt, dann wird diese Struktur aufgeteilt. Die Beleuchtung der einzelnen Teile ergibt keine vollständige Information mehr. Daher kann sofort festgestellt werden, ob es sich um ein Teil einer vollständigen Kennzeichnung, d.h. ein abgelöstes Kennzeichen handelt.

Vorzugsweise sind die Kennzeichen ganz oder teilweise holografisch aufgezeichnet. Dieser Code kann geheim gehalten werden. Eine Feststellung der aufgezeichneten Daten ist dann selbst mit einem für die Ablesung von Hologrammen geeigneten Lesegerät nicht möglich, sofern nicht ein entsprechend ausgebildeter Codeleser verfügbar ist.

Zweckmäßigerweise besteht der Träger aus einer Polyesterfolie mit einer leitfähigen Thermoplastschicht. Dieser Träger ist in der Herstellung wirtschaftlich. Weiterhin können die Kennzeichen in einfacher Weise aufgezeichnet werden.

Vorzugsweise ist der Träger an einem Kraftfahrzeug befestigt. Die oben erläuterte Vorrichtung ermöglicht die fälschungssichere Speicherung zahlreicher für die Fahrzeugdentifizierung wichtiger Daten. Diese Daten lassen sich bei einer Kontrolle schnell auswerten.

Bei einer zweckmäßigen Ausführungsform ist der Träger mit den Aufzeichnungen zusätzlich zu den Kraftfahrzeugschildern vorhanden. Sofern die Kraftfahr-

- 4 -

zeugschilder gefälscht sind, läßt sich dies durch Vergleich mit den auf dem Träger holografisch aufgezeichneten Daten sofort feststellen.

Es ist günstig, den Träger zwischen Glasscheiben anzuordnen. Durch diese Maßnahme wird der Träger vor Beschädigung weitgehend geschützt.

Der Träger kann auch auf der Innenseite von einer Scheibe eines Kraftfahrzeugs angeordnet sein. Schmutzablagerungen auf dem Träger lassen sich hierdurch vermeiden. Durch die Reinigung der Scheibe wird die Ablesbarkeit des Trägers verbessert. Außerdem kann der Träger leicht und schnell am Fahrzeug angebracht werden.

Es ist jedoch auch möglich, den Träger auf der Karosserie eines Kraftfahrzeugs anzuordnen.

Bei einer anderen zweckmäßigen Ausführungsform ist der Träger durch ein kohärentes Lichtbündel beleuchtbar, dessen Wellenlänge gleich oder ungefähr gleich der für die Aufnahme verwendeten Wellenlänge ist. Wenn die Kennzeichnungen im Klartext aufgezeichnet sind, können diese sofort erkannt werden. Eine Überprüfung, ob ein Fahrzeug gestohlen ist oder nicht, ist deshalb schnell und einfach möglich. Als Lichtquelle kann ein tragbarer Laser verwendet werden. Diese Art der Ablesung eignet sich zur Kontrolle langsam fahrender bzw. stehender Fahrzeuge, z.B. an Grenzübergängen.

Eine weitere günstige Ausführungsform besteht darin, daß vom Träger ausgehendes Licht in einer reellen Abbildung darstellbar ist, die von einem optischen Lesegerät erfassbar ist, dem ein Auswertgerät nachgeschaltet ist.

Die holografisch gespeicherte Information wird bei dieser Anordnung automatisch überprüft. Als Auswertegerät kann z.B. eine Mikroprozessorsteuerung oder ein Prozeßrechner verwendet werden, deren Speicher eine Liste der gestohlenen Fahrzeuge enthält. Die Ablesung erfolgt auch bei größerer Geschwindigkeit des Fahrzeugs genau. Die Anordnung eignet sich somit zur Kontrolle des fließenden Verkehrs. Durch ein entsprechendes Programm im Mikroprozessor bzw. im Prozeßrechner wird bei der Erfassung eines gestohlenen Fahrzeugs eine Meldung erzeugt.

Bei einer anderen bevorzugten Ausführungsform ist zwischen einer Lichtquelle für kohärentes Licht und dem Träger ein weiterer Träger mit in Form von Hologrammaufnahmen aufgezeichneten, ausgewählten Kennzeichnungen angeordnet, wobei vom ersten Träger ausgehende Strahlung auf Photodetektoren gerichtet ist, an die eine Auswerteschaltung angeschlossen ist. Bei den ausgewählten Kennzeichnungen kann es sich um die Kennzeichen von gestohlenen Kraftfahrzeugen handeln. Die Auswerteschaltung gibt eine Meldung ab, wenn eines der ausgewählten Kennzeichen mit der auf dem Fahrzeug vorhandenen holografischen Aufzeichnung übereinstimmt. Ein gestohlenes Fahrzeug kann mit dieser Anordnung auch während einer schnellen Fahrt festgestellt werden. Die Aufzeichnungsdichte auf dem weiteren Träger kann sehr hoch sein. Es ist daher ohne Schwierigkeit möglich, die Kennzeichen von etwa einhunderttausend gestohlenen Fahrzeugen in einem Hologramm zu erfassen.

Vorzugsweise ist vor dem Empfänger ein zusätzlicher Träger mit einer zur Hologrammaufnahme des ersten Trägers inversen Hologrammaufnahme angeordnet. Diese Anordnung erlaubt die Feststellung, ob ein bestimmtes Fahrzeug vorliegt. Es kann daher eine gezielte Überprüfung durchgeführt werden. Auch diese Anordnung kann für die Kontrolle des fließenden Verkehrs eingesetzt werden.

Im Strahlengang des Lichtbündels kann ein teildurchlässiger Spiegel angeordnet sein, durch den vom Träger reflektiertes Licht gegen einen Photodetektor gerichtet wird.

Vorzugsweise trifft die vom Träger ausgehende Strahlung auf mehrere Empfänger, vor denen weitere Träger angeordnet sind, die Hologrammaufnahmen enthalten. Damit können zugleich mehrere Kennzeichen gezielt überprüft werden. Wenn z.B. vier Träger verwendet werden, können aus vorbeifahrenden Fahrzeugen diejenigen genau angegeben werden, deren Kennzeichen auf diesen Trägern gespeichert sind.

Bei einer anderen zweckmäßigen Ausführungsform wird als Lichtquelle ein Laser eingesetzt, dessen Leistung pro Einheit der Empfängerfläche unterhalb der für das Auge schädlichen Schwelle liegt. Diese Anordnung kann ohne Schwierigkeit für die Überprüfung von Kraftfahrzeugen eingesetzt werden. Trifft das Licht des Laserlichtquelle auf das Auge eines Fahrzeuginsassen, dann tritt hierdurch keine Gefährdung ein. Deshalb kann der Träger an einer Scheibe des Fahrzeugs angeordnet sein. Einer Verschmutzung wird hierdurch vorgebeugt.

Der Träger kann eine Fläche von etwa 40 cm$^2$ aufweisen. Das vom Laser ausgesandte Lichtbündel wird stärker aufgeweitet als es diese Fläche erforderlich macht. Damit können Schwankungen in der Höhe des Trägers ausgeglichen werden. Derartige Schwankungen sind z.B. bei unterschiedlicher Belastung eines Fahrzeugs nicht zu vermeiden.

Es ist günstig, wenn die Wellenlänge der Lichtquelle im Infrarotbereich liegt. Da das Meßlichtbündel nicht sichtbar ist, kann eine Kontrolle nicht so leicht als solche erkannt werden.

Als Lichtquelle kann auch ein Helium-Neon-Laser verwendet werden. Mit einem solchen Laser läßt sich eine kostengünstige Überwachungsanordnung aufbauen.

Bei einer anderen bevorzugten Ausführungsform ist vorgesehen, daß der oder die Träger mit inversen Hologrammaufnahmen in einem Strahlengang angeordnet sind, der an einer punktförmigen Stelle fokussiert ist, an dem sich ein Photodetektor befindet. Diese Anordnung erlaubt den Einsatz von Photodetektoren mit kleinen Abmessungen.

Zweckmäßig ist es, wenn der erste Träger durch einen Impulslaser beleuchtbar ist, der mittels einer Überwachungseinrichtung einschaltbar ist. Da der Laser nur kurzzeitig betätigt wird, kann die Beleuchtungsstärke etwas gesteigert werden, ohne daß die für das menschliche Auge schädliche Dosis erreicht wird. Deshalb kann die Meßanordnung in größerer Entfernung vom Fahrzeug aufgestellt sein. Die Überprüfungen können daher unbemerkt durchgeführt werden. Die Überwachungseinrichtung kann eine Lichtschranke enthalten.

Bei einer weiteren günstigen Ausführungsform erzeugt eine den Gegenstand erfassende Einrichtung ein Austastsignal, durch das die Photodetektoren für die vom Träger ausgehende Strahlung freigebbar sind. Mit dieser Anordnung kann die Beeinflussung der Photodetektoren durch Störlicht weitgehend beseitigt werden.

Darüber hinaus ist es zweckmäßig als Photodetektoren selbstabtastende Diodenreihen vorzusehen. Die Kennzeichen können hiermit auf relativ einfache Weise entschlüsselt werden.

Die Erfindung wird im folgenden an Hand von in einer Zeichnung dargestellten Ausführungsformen näher erläutert, aus denen sich weitere Merkmale sowie Vorteile ergeben.
Es zeigen:

Fig. 1 eine Vorrichtung zum Feststellen der Informationen im Schema,

Fig. 2 eine Befestigungsart für fälschungssichere Kennzeichen,

Fig. 3 ein an der Scheibe eines Fahrzeugs befestigtes Kennzeichen,

Fig. 4 eine andere Vorrichtung zum Feststellen der Informationen auf fälschungssicher gekennzeichneten Gegenständen im Schema,

Fig. 5 eine Vorrichtung zum Vergleich der Information auf fälschungssicher gekennzeichneten Gegenständen mit ausgewählten Einzelinformationen im Schema,

Als Träger 2 einer fälschungssicheren Kennzeichnung dient eine Polyesterfolie mit einer Thermoplastschicht. Die gewünschte Information, z.B. ein vollständiges Fahrzeugkennzeichen, die Fahrgestellnummer, das Baujahr, der Fahrzeugtyp usw. wird mittels einer Hologrammaufnahme der Thermoplastschicht eingeprägt. Für die Aufnahme kann auch ein elektrostatisches Kopierverfahren verwendet werden. Es sind Aufnahmeverfahren geeignet, die eine Oberflächenveränderung und/oder eine Änderung der Materialeigenschaften der Schicht hervorrufen. Die Änderungen müssen sich in optischer Hinsicht auswirken.

Die Folie hat z.B. eine Fläche von 40 cm$^2$ und eine geringe mechanische Festigkeit. Sie wird an dem zu identifizierenden Objekt 1, einem Kraftfahrzeug, angeklebt. Die Haftkräfte am Objekt 1, sind größer als die Reißfestigkeit der Folie. Infolgedessen wird die Folie beim Ablösen von dem zu identifizierenden Gegenstand zerstört. Eine Weiterverwendung einer kompletten Folie ist deshalb nicht möglich. Daher kommt ein Diebstahl des vorstehend erwähnten Kennzeichnungsmittels und dessen Weiterverwendung an einem anderen Gegenstand nicht in Betracht.

Eine Änderung der holografischen Aufzeichnung ist nach ihrer Fertigstellung nicht mehr möglich. Die Kennzeichnung kann also nicht mehr geändert werden. Solange die Kennzeichnung am Gegenstand verbleibt, ist demnach eine Feststellung, ob ein Diebstahl vorliegt, leicht möglich. Wenn die Kennzeichnung am Gegenstand nicht mehr vorhanden ist, kann dies ebenfalls schnell und einfach festgestellt werden.

Die vorstehend erläuterte Kennzeichnung eignet sich insbesondere für Kraftfahrzeuge. Die Herstellung ist wirtschaftlich. Die Aufnahme des Hologramms kann in kurzer Zeit erfolgen. Auf einem Träger können eine Vielzahl von Informationen gespeichert werden, d.h. die Informationsdicht ist sehr hoch.

Auf dem Träger ist eine weitere Hologrammaufnahme vorhanden, die von den übrigen Aufzeichnungen unabhängig ist. Diese Aufnahme weist eine vorgegebenen Struktur auf. Beispielsweise ist die Aufnahme rasterförmig ausgebildet. Die weitere Hologrammaufnahme ist an ausgewählten Stellen so verteilt, daß sie bei Zerstörung des Trägers ebenfalls zerstört wird. Sie dient als Gültigkeitsinformation für die anderen Aufzeichnungen. Aus der rasterförmigen Anordnung wird bei der Bildrekonstruktion z.B. eine bestimmte Gruppierung von Punkten erhalten, die unvollständig ist, wenn nicht alle Rasterspuren vorhanden sind. Aus der Anzahl und der Lage der Punkte läßt sich dann entnehmen, ob der Träger noch komplett ist. Dadurch wird vermieden, daß Teile der Folie weiterverwendet werden können.

Es können auch mehrere Strukturen holografisch aufgezeichnet sein. Durch eine Zerlegung des Aufzeichnungsträgers wird zumindest eine der Strukturen so zerstört, daß die in ihr gespeicherte Information nicht mehr vollständig wieder gewonnen werden kann. Durch die Überwachung dieser Zusatzinformationen, kann die Beschädigung des Trägers ermittelt werden.

Bei einem möglichen Aufbau des Trägers sind die Zusatzinformationen auf Teilen vorhanden, die dem Träger nach der Aufnahme des Kennzeichens an ausgesparten Stellen hinzugefügt werden. Die Aufnahme des Kennzeichens erfolgt z.B. mit einem Träger, der Aussparungen enthält. Trotzdem ergibt sich eine vollständige, rekonstruierbare Information. In die Aussparungen werden danach kleine Träger mit den Zusatzinformationen eingefügt. Wird der Träger zerstört, dann enthalten die einzelnen Teile nicht mehr die gesamte Zusatzinformation. Diese Tatsache läßt sich bei der Rekonstruktion der Information feststellen. Es ist möglich, die Informationen in Klarschrift holografisch aufzuzeichnen. Diese Maßnahme hat den Vorteil, daß die Information bei der Bildrekonstruktion sofort erkennbar ist. Vorteilhaft ist jedoch auch die holografische Aufzeichnung der Informationen in kodierter Form. Ein derartiger Kode kann geheim gehalten werden. Selbst bei der Verwendung des oben näher erläuterten Aufzeichnungsträgers, bei Kenntnis der aufzuzeichnenden Information und bei der Verwendung der erforderlichen Aufzeichnungsapparatur kann deshalb eine Kennzeichnung nicht nachgeahmt bzw. gefährdet werden. Eine Veränderung bestehender Kennzeichen und deren Weiterverwendung ist, wie oben dargelegt, ohnedies nicht möglich.

Der Träger 2 kann zwischen zwei Glasscheiben 3,4 angeordnet sein. Damit wird ein besonders guter Schutz gegen Beschädigungen erzielt. Eine unmittelbare Verschmutzung des Trägers 2 ist nicht möglich. Die Scheiben 3,4 lassen sich leicht reinigen.

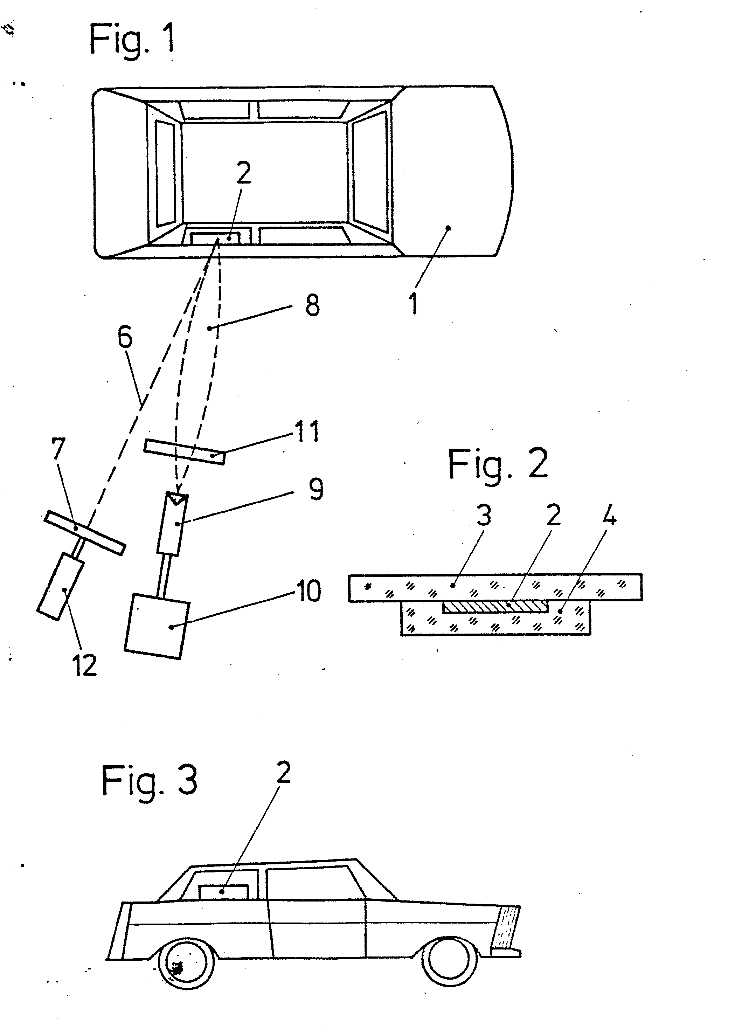

Es kann z.B. Kraftfahrzeughaltern zur Auflage gemacht werden, daß sie die Kennzeichnung ebenso wie die Kennzeichnungsschilder bei zu starkem Schmutzbelag reinigen müssen. Der Träger 2 kann auch an der Innenseite einer Scheibe eines Kraftfahrzeugs angeordnet sein, wie dies in Fig. 3 dargestellt ist. Wegen seiner geringen Abmessungen stört der Träger 2 nicht die Sicht nach außen, bleibt aber gegen Witterungseinflüsse weitgehend geschützt.

Die aufgezeichnete Information läßt sich jedoch auch trotz einer gewissen Verschmutzung der Trägeroberfläche und trotz Kratzspuren oder Deformation an den Rändern wiedergewinnen, so daß auch eine Verbindung mit der Kraftfahrzeugkarosserie möglich ist. Die zusätzlichen Informationen, die eine Überwachung auf die Unversehrtheit des Trägers 2 ermöglichen, erstrecken sich zweckmäßigerweise nicht ganz bis zum Rand des Trägers.

Die auf dem Träger 2 vorhandene Information wird mit einer Laserlichtquelle 12 rekonstruiert, die ein kohärentes Lichtbündel 6 erzeugt, das auf den Träger 2 gerichtet wird. Es ist möglich, das durch den Träger 2 verlaufende Licht für die Informationswiedergewinnung auszunutzen. Wegen der Art des zu identifizierenden Opjekts ist aber die Verarbeitung eines reflektierten Lichtbündels 8 häufiger notwendig. Durch die Betrachtung des reflektierten Lichtbündels 8 kann die gespeicherte Information festgestellt werden. Diese Art der Auswertung kommt vorwiegend bei stehenden oder langsam bewegten Fahrzeugen in Frage.

Wenn sich die Fahrzeuge mit großer Geschwindigkeit bewegen, ist eine automatische Auswertung der Kennzeichen günstiger. Eine Möglichkeit der automatischen Auswertung besteht darin, die Informationen mittels des Lichtbündels 8 abzubilden und durch ein optisches Lesegerät zu erfassen. Das Lesegerät speist eine nic im einzelnen dargestellte Auswerteschaltung 10, bei der es sich z.B. um eine Mikroprozessorsteuerung handeln kann. Die Kennzeichen der gestohlenen Fahrzeuge werden gespeichert und mittels eines Programms mit dem gelesenen Kennzeichen verglichen. Bei Übereinstimmung gibt die Steuerung eine entsprechende Meldung ab.

Eine weitere Möglichkeit der automatischen Auswertung ergibt sich bei der Verwendung eines zusätzlichen Trägers 7, auf dem die gesuchten Kennzeichen holografisch gespeichert sind. Dieser Träger 7 wird in den Strahlengang des Lichtbündels 6 gebracht. Praktisch befindet sich der Träger 7 in kurzem Abstand vor der Lichtquelle 12. Das reflektierte Bündel 8 fällt auf Photodetektoren 9. Es tritt nur dann ein ausreichender Lichteinfall auf, wenn die Information des Trägers 2 mit einer auf dem Träger 7 vorhandenen Information übereinstimmt.

Falls nur ein mit einer bestimmten Information bezeichnetes Fahrzeug gesucht wird, kann ein weiterer Träger 11, der diese Information in Form eines inversen Hologramms enthält, vor den Photodetektoren 9 angeordnet werden. Auf die Photodetektoren 9 fällt dann nur eine für die Anzeige ausreichende Energie, wenn auf den Trägern 2 und 11 die gleichen Informationen enthalten sind. Auf den Photodetektoren 9 wird über das vom Träger 2 reflektierte Licht 8 eine reele Abbildung der auf dem Träger 2 aufgezeichneten Information hergestellt.

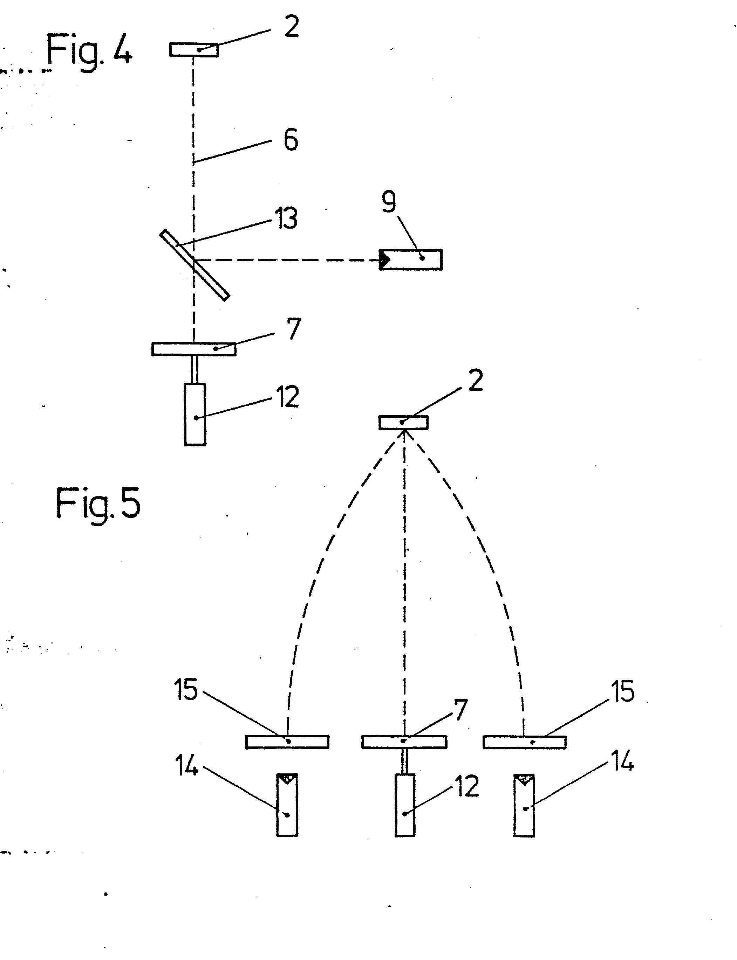

Bei der in Fig. 4 dargestellten Anordnung befindet sich im Strahlengang des von der Laserlichtquelle 12 ausgesandten Lichtbündels 6 ein teildurchlässiger Spiegel 13, der gegen die optische Achse um 45° geneigt ist. Das vom Träger 2 reflektierte Licht wird vom teildurchlässigen Spiegel abgelenkt und gelangt auf die Photodetektoren 9, von denen in Fig. 9 einer dargestellt ist.

Weiterhin können neben der Laserlichtquelle 12 mehrere Photodetektoren 14 angeordnet sein, die vom Träger 2 ausgehende Lichtstrahlen empfangen. Eine derartige Anordnung ist im Schema in Fig. 5 dargestellt. Vor den Photodetektoren 14 befinden sich Hologrammaufnahmen von Kennzeichen, die gesucht werden. Wenn das Kennzeichen auf dem Träger 2 mit einem der Kennzeichnungen der Träger 15 übereinstimmt, wird durch den auf den Empfänger 14 fallenden Lichtimpuls eine Meldung erzeugt. Daher lassen sich mit der Anordnung gemäß Fig. 5 bestimmte Kennzeichen gezielt ermitteln.

Das reelle Abbild der Aufzeichnung des Trägers 2 kann sich über mehrere photoelektrische Detektoren erstrecken. Es besteht aber weiterhin die Möglichkeit, den Strahlengang des zurückfallenden Lichtes zu fokussieren, z.B. mit einer Optik. In diesem Fall reicht es aus, wenn an derjenigen Stelle, an der die Strahlen fokussiert sind, ein Photodetektor mit geringen Abmessungen angeordnet ist. Ein derartiger kleiner Photodetektor ist kostengünstiger als flächenmäßig ausgedehnte Photodetektoren und schneller.

Das vom Laser 12 ausgesandte Lichtbündel wird aufgefächert. Die Auffächerung ist etwas größer als die Fläche des Trägers 2. Durch die Auffächerung wird die Bestrahlungsstärke des Lasers vermindert. Die Leistung des Lasers und die Auffächerung wird so gewählt, daß die Kennzeichen auf dem Träger 2 auch auf größere Entfernungen, z.B. 10 m einwandfrei gelesen werden können und andererseits die für das menschliche Auge gefährliche Schwelle unterschritten wird. Daher schadet es nicht, wenn das Lichtbündel des Lasers auf das Auge eines Fahrzeuginsassen oder eines Passanten auftrifft.

Der Laser 12 kann z.B. kohärente Infrarotstrahlen aussenden. Die Strahlen sind nicht sichtbar. Dies ist insbesondere bei Nebel oder staubhaltiger Luft von Bedeutung, da dann eine Kontrolle weitgehend unbemerkt bleib. Ein besonders wirtschaftlich herzustellendes Kontrollgerät ergibt sich bei der Verwendung eines Helium-Neon-Lasers. Es kann aber auch ein Laser für Ultraviolettstrahlung eingesetzt werden.

Das reelle Abbild der Kennzeichnung des Trägers 2 wird vorzugsweise mit einer selbstabtastenden Diodenreihe erfaßt, die auch als "self-scanning array" bezeichnet ist. Dieser Detektor enthält matrixförmig angeordnete Reihen und Spalten von Photodioden, die nach Art eines Schieberegisters miteinander verbunden sind. Die Zeilen können seriell ausgelesen werden. Aufgrund der in den einzelnen Schieberegisterstufen enthaltenen binären Werte läßt sich die Buchstaben- oder Zifferninformation erhalten.

Da die Beleuchtungsstärke für das menschliche Auge nicht kritisch ist, bestehen keine Einwände, den Laser im Dauerstrichverfahren zu betreiben. Wenn die Kontrolle in größerem Abstand vom Fahrzeug aus durchgeführt werden soll, ist es von Vorteil, einen Impulslaser einzusetzen. Durch den kurzzeitigen Betrieb kann eine höhere Leistung erzeugt werden, die jedoch immer noch eine unkritische Dosis für das menschliche Auge hervorruft.

Für die Einschaltung des Impulslasers wird eine Überwachungseinrichtung verwendet. Diese stellt fest, ob ein Fahrzeug im Überwachungsbereich vorhanden ist und gibt die Energiezufuhr zum Laser frei. Als Überwachungseinrichtung kann eine Lichtschranke eingesetzt werden.

Um Beeinflussungen durch Störlicht zu vermeiden, ist es günstig, mittels eines Austastsignals die Weiterverarbeitung des von den Photodetektoren erzeugten Signals freizugeben. Dieses Austastsignal wird zweckmäßigerweise von der Überwachungseinrichtung ausgelöst. Die Überwachungseinrichtung erkennt z.B. die Vorderseite eines Fahrzeugs. Der Träger 2 ist dann z.B. in einem festgelegten Abstand von der Frontpartie am Wagen befestigt. Mittels einer Zeitverzögerungsschaltung, die von der Überwachungseinrichtung angestoßen wird, erfolgt die Freigabe der Photodetektoren kurz bevor der Träger 2 in den Bereich des Laserlichtstrahls gelangt. In diesem Fall muß die Zeitverzögerung auf die Wagengeschwindigkeit abgestimmt sein. Unabhängig von der Wagengeschwindigkeit wird man aber dann, wenn mittels einer zusätzlichen Markierung das Austastsignal erzeugt wird. Diese zusätzliche Markierung kann sich am Anfang des Trägers 2 befinden. Es kann sich dabei ebenfalls um eine Hologrammaufnahme handeln, die von einem separaten Detektor ausgewertet wird, der anschließend das Austastsignal abgibt.

Vielfach werden gestohlene Fahrzeuge mit einem anderen Farbanstrich versehen. Der Farbanstrich kann durch eine geänderte Lichtschrankenanordnung festgestellt werden. Gefälschte Kennzeichen sind ohne Schwierigkeit zu erkennen. Sollte jedoch ein ungefälschtes Kennzeichen in Verbindung mit einem anderen Farbanstrich vorhanden sein, dann läßt sich dies aus einem Vergleich zwischen der gemessenen Farbe und der im Kennzeichen festgehaltenen Farbe ermitteln. Grundsätzlich können alle Merkmale eines Gegenstandes, die meßbar oder erfaßbar sind, im Hologramm entsprechend codiert gespeichert werden, so daß eine Kontrolle zwischen der Angabe im Hologramm und dem entsprechenden Merkmal vorgenommen werden kann.

So läßt sich z.B. auch die Länge eines Fahrzeuges überprüfen, wenn man mit Hilfe einer Lichtschranke aus der Abdunkelungszeit (durch das Fahrzeug) und der Geschwindigkeit die Länge ermittelt und mit den entsprechenden im Hologramm gespeicherten Werten
vergleicht.

- 1 -

Patentansprüche:

1. Vorrichtung zur fälschungssicheren Kennzeichnung von Gegenständen,
   dadurch gekennzeichnet,
   daß die Kennzeichen als Hologrammaufnahmen auf einem Träger (2) aufgezeichnet sind, der mit dem zu identifizierenden Gegenstand (1) verbunden und ohne Zerstörung der Aufzeichnung nicht von diesem lösbar ist.

2. Vorrichtung nach Anspruch 1,
   dadurch gekennzeichnet,
   daß auf dem Träger eine oder mehrere weitere Hologrammaufnahmen mit vorgegebenen Strukturen vorhanden sind, die an ausgewählten Stellen des Trägers aufgezeichnet sind, wobei durch Zerstörung des Trägers aus den auf den Teilen verbleibenden Reststrukturen keine vollständige Information herleitbar ist.

3. Vorrichtung nach Anspruch 1 oder 2,
   dadurch gekennzeichnet,
   daß die Kennzeichen ganz oder teilweise in einem Code holografisch aufgezeichnet sind.

4. Vorrichtung nach Anspruch 1, oder einem der folgenden,
   dadurch gekennzeichnet,
   daß der Träger aus einer Polyesterfolie mit einer leitfähigen Thermoplastschicht besteht.

5. Vorrichtung nach Anspruch 1 oder einem
der folgenden,
dadurch gekennzeichnet,
daß der Träger an einem Kraftfahrzeug befestigt ist.

6. Vorrichtung nach Anspruch 5,
dadurch gekennzeichnet,
daß der Träger mit den Aufzeichnungen zusätzlich zu den Kraftfahrzeugschildern vorhanden
ist.

7. Vorrichtung nach Anspruch 1 oder einem
der folgenden,
dadurch gekennzeichnet,
daß der Träger (2) zwischen Glasscheiben (3,4)
angeordnet ist.

8. Vorrichtung nach Anspruch 1 oder einem der
Ansprüche 2 bis 5,
dadurch gekennzeichnet, daß der Träger (2) auf
der Innenseite einer der Scheiben eines Kraftfahrzeuges (5) angeordnet ist.

9. Vorrichtung nach Anspruch 1 oder einem der
Ansprüche 2 bis 5,
dadurch gekennzeichnet,
daß der Träger (2) auf der Karosserie eines
Kraftfahrzeuges (5) angeordnet ist.

10. Vorrichtung nach Anspruch 1 oder einem der folgenden,

dadurch gekennzeichnet,

daß der Träger (2) mit den Hologrammaufnahmen durch ein kohärentes Lichtbündel (6) beleuchtbar ist, dessen Wellenlänge gleich oder ungefähr gleich der für die Aufnahme verwendeten Wellenlänge ist.

11. Vorrichtung nach Anspruch 9 oder 10, dadurch gekennzeichnet, daß vom Träger (2) ausgehendes Licht (ß) in einer reellen Abbildung darstellbar ist, die von einem optischen Lesegerät erfaßbar ist, dem ein Auswertegerät nachgeschaltet ist.

12. Vorrichtung nach Anspruch 1 oder einem der folgenden,

dadurch gekennzeichnet, daß zwischen einer Lichtquelle (12) für kohärentes Licht und dem Träger (2) ein weiterer Träger (7) mit in Form von Hologrammaufnahmen aufgezeichneten, ausgewählten Kennzeichnungen angeordnet ist und daß vom ersten Träger ausgehende Strahlung (8) auf Photodetektoren (9) gerichtet ist, an die eine Auswerteschaltung (10) angeschlossen ist.

13. Vorrichtung nach Anspruch 1 oder einem der folgenden,

dadurch gekennzeichnet,

daß vor den Photodetektoren (9) ein zusätzlicher Träger (11) mit einer zur Hologrammaufnahme des ersten Trägers (2) inversen Hologrammaufnahme angeordnet ist.

14. Vorrichtung nach Anspruch 10 oder einem der folgenden, dadurch gekennzeichnet, daß im Strahlengang des Lichtbündels (8) der Lichtquelle (12) ein teildurchlässiger Spiegel (13) angeordnet ist, durch den vom Träger (2) reflektiertes Licht gegen einen Photodetektor (9) gerichtet wird.

15. Vorrichtung nach Anspruch 13 oder 14, dadurch gekennzeichnet, daß die vom Träger (2) ausgehende Strahlung auf mehrere photoelektrische Empfänger (14) auftrifft, vor denen weitere Träger (15) angeordnet sind, die zur Hologrammaufnahme des ersten Trägers (2) inverse Hologrammaufnahmen enthalten.

16. Vorrichtung nach Anspruch 9 oder einander folgenden, dadurch gekennzeichnet, daß als Lichtquelle (12) ein Laser eingesetzt ist, dessen Leistung pro Einheit der Empfängerfläche unterhalb der für das Auge schädlichen Schwelle liegt.

17. Vorrichtung nach Anspruch 9 oder einem der folgenden, dadurch gekennzeichnet, daß der erste Träger (2) eine Fläche von ungefähr 40 cm$^2$ aufweist.

18. Vorrichtung nach Anspruch 9 oder einem der folgenden, dadurch gekennzeichnet, daß die Wellenlänge der Lichtquelle (12) im Infrarotbereich liegt.

19. Vorrichtung nach Anspruch 16, dadurch gekennzeichnet, daß ein Helium-Neon-Laser verwendet ist.

20. Vorrichtung nach Anspruch 16, dadurch gekennzeichnet, daß ein Laser für Ultraviolettstrahlung verwendet ist.

21. Vorrichtung nach Anspruch 13 oder einem der folgenden, dadurch gekennzeichnet, daß der oder die Träger (7,15) mit inversen Hologrammaufnahmen in einem Strahlengang angeordnet sind, der an einer punktförmigen Stelle fokussiert ist, an dem sich ein Photodetektor befindet.

22. Vorrichtung nach Anspruch 16 oder einem der folgenden, dadurch gekennzeichnet, daß der erste Träger (2) durch einen Impulslaser beleuchtbar ist, der mittels einer Überwachungseinrichtung einschaltbar ist.

23. Vorrichtung nach Anspruch 22,
   dadurch gekennzeichnet,
   daß die Überwachungseinrichtung eine Lichtschranke enthält.

24. Vorrichtung nach Anspruch 11 oder einem
   der folgenden,
   dadurch gekennzeichnet,
   daß eine den Gegenstand erfassende Einrichtung
   ein Austastsignal erzeugt, durch das die
   Photodetektoren für die vom Träger (2) ausgehende Strahlung freigebbar sind.

25. Vorrichtung nach Anspruch 12 oder einem
   der folgenden,
   dadurch gekennzeichnet,
   daß als Photodetektoren selbstabtastende
   Dioden vorgesehen sind.

0002537

## Fig. 1

## Fig. 2

## Fig. 3

0002537

Fig. 4

Fig. 5